# EUROPEAN PATENT SPECIFICATION

(11) **EP 4 484 824 B1**
(45) Date of publication and mention of the grant of the patent: **02.09.2026**
(21) Application number: 23181492.2
(22) Date of filing: 26.06.2023
(51) Int. Cl.: F23N 1/00

(54) **PLUG AND PLAY PX52 VALVE**
PLUG-AND-PLAY PX52-VENTIL
VANNE PX52 PRÊTE À L'EMPLOI

(43) Date of publication of application: 01.01.2025
(73) Proprietor: Pittway Sarl, 1180 Rolle (CH)
(72) Inventor: WAGNER, Petr, 77900 Olomouc-Lazce (CZ); KOBLIZEK, Petr, 62000 Brno-Turany (CZ); KRATOCHVIL, Ladislav, 67801 Blansko (CZ)
(74) Representative: Murgitroyd & Company

(56) References cited:
- US-A1- 2014 134 550
- US-A1- 2016 231 721
- US-A1- 2017 115 002

## Description

### TECHNICAL FIELD

The present invention relates to a heating system (e.g. for a house or building), a gas valve suitable for use in said heating system to control the flow of gas to a gas burner and a gas valve control unit for controlling the gas valve and communicating with the gas burner controller.

### BACKGROUND

Heating systems commonly use boilers to heat water burning a gas in the burner, for example propane or natural gas. This heat may then be passed through a heat exchanger such that heat is transferred to another fluid (e.g. water or air) which can then be distributed through pipework to warm an environment, such as a house or building. Such gas burners thus require a gas valve which may be used to regulate or control the flow of gas into the gas burner and thus the heat production.

Typical gas burners are operated by a controller which also controls operation of an associated gas valve. Within the meaning of the present disclosure, operation of the gas valve includes operations to open and close the valve. To ensure correct operation of a gas valve, the valve must be calibrated. Typically, calibration is performed by the manufacturer before providing the gas valve to a consumer. Valves comprising stepper motors may have varying relationships between the stepper motor step size and the resulting change in flow of the gas. The calibration data must be communicated to, and stored in the memory of, the burner's controller to ensure reliable functioning of the heating system in accordance with regulations and/or relevant safety standards. However, the step of synchronising the gas valve with the gas burner, by communicating or loading the calibration data of the gas valve to the gas burner controller, can be challenging. If the burner controller is provided with incorrect data and/or an incorrect or unsuitable gas valve is provided for use therewith, the operation of the gas burner is compromised.

Known methods for communicating the calibration data of the gas valve to the gas burner's controller may involve printing the calibration data on the valve that is used by a gas burner installer to manually enter the data onto the burner controller during installation. Alternatively, the data may be provided in form of a QR code, and a QR code reader may be used to acquire the date and write the data onto the controller during installation. These methods however have the problem that errors may be introduced during the data entry due to manual inputting errors or by incorrectly labelling the calibration data. For example, a gas valve may be incorrectly assigned or have the wrong QR code or printed label attached. This can lead to the installation of an unsuitable gas valve, or the burner controller operating with the incorrect calibration data.

Alternatively, components having very narrow tolerance bands may be used in gas valves to avoid calibration altogether. However, such components are very expensive and result in systems that are not affordable for the average consumer market.

US 2017/115002 A1, US 2014/134550 A1, and US 2016/231721 A1 can be regarded as useful to understand the invention.

The present invention aims to provide an improved heating system and gas valve which solves at least one of the above referenced problems and/or which provides improvements generally.

### SUMMARY OF INVENTION

In a first aspect of the invention, a heating system is provided comprising:
a gas burner configured to burn gas to produce heat, the gas burner comprising
a gas inlet and a gas burner controller;
a gas valve arranged to regulate the flow of gas to the gas inlet of the gas burner, and connected to the gas burner controller via one or more power lines; and
a gas valve control unit operatively connected to the gas valve, wherein the gas valve control unit includes stored parameter data of the gas valve and is configured to transmit the parameter data of the gas valve to the gas burner controller via said one or more power lines between the gas valve and the gas burner controller.

The gas valve may be operated to regulate/modulate the flow of gas through the valve by operation of an actuator such as a stepper motor. It will be appreciated that, for the gas valve to function, power must be supplied thereto via a power line to provide the energy required to open and close the gas valve. The gas valve and the gas burner controller are electrically connected. The electrical connection between the gas valve and the gas burner operates as a communication line to enable the gas burner controller to communicate with and control the gas valve. The gas valve control unit of the present disclosure advantageously utilises the power lines to communicate the parameter data of the gas valve directly from the gas valve control unit to the gas burner controller. The parameter data may be calibration data and may be loaded onto the gas valve control unit during manufacture, so the data is directly stored on and associated with the valve. The ability to communicate the parameter data directly from the gas valve control unit to the gas burner controller advantageously obviates the requirement for manual entry and ensures that the gas valve parameters are correctly communicated to the gas burner controller. The operation and installation of the heating system is thereby improved. The gas valve control unit may be connected to and form part of the gas valve as an integrated component.

The gas burner controller may be operative to transmit an enquiry signal to the gas valve control unit, and the gas valve control unit is operative to transmit the parameter data to the gas burner controller in response to receipt of the enquiry signal. Transmission of the enquiry signal may include transmission of a data packet to the gas valve control unit.

The gas valve and the gas valve control unit may each be provided as a retrofit units. For example, a pre-existing gas burner may be retrofit with the gas valve comprising the gas valve control unit. For example, a pre-existing gas valve may be retrofit with the gas valve control unit to provide a heating system. In some embodiments, the gas valve may be retrofit with the gas valve control unit before the gas valve is connected to the gas burner. In other embodiments, the gas valve may be retrofit with the gas valve control unit after the gas valve is connected to the gas burner. In other words, the gas valve parameter data may be communicated from the gas valve control unit to the gas burner controller without needing to modify the existing gas burner and/or the gas valve. Thus, advantageously, there is no need to provide additional communication lines, in addition to the pre-existing power lines already present in the heating system, to allow the parameter data of the gas valve to be communicated from the gas valve control unit to the gas burner.

The gas valve may have an operating voltage required to operate the valve and wherein the enquiry signal comprises a voltage provided along at least one of the power lines between the gas burner controller and the gas valve that is lower than the operating voltage of the gas valve. The enquiry signal may be transmitted upon power up of the gas burner.

The gas valve may include an actuator, which may for example be a stepper motor, for operating the valve and the operating voltage is the voltage required to operate the actuator. Operating the valve may comprise modulating opening of the valve to regulate gas flow through the valve and/or opening and closing the valve (i.e. on/off). Opening and closing of the valve may be performed by a separate component of the system to the actuator, with actuator only modulating opening.

The parameter data may be transmitted from the gas valve control unit to the gas burner controller in the form of a modulated signal via the power lines. The modulated signal may be a binary signal comprising two voltage bands and the gas burner controller comprises a demodulation unit to decode the modulated signal. The two voltage bands may comprise a first voltage and a second voltage and wherein the first and second voltages are both lower than the operating voltage of the gas valve. The operating voltage of the gas valve may be in the range 18V to 30V, the first voltage may be in the range 2V to 10V and the second voltage is less than the first voltage 24V. In an embodiment, the first voltage may be 5V and the second voltage may be less than 5V.

The parameter data may include a gas valve identifier and the gas burner controller is configured to verify installation of a correct gas valve based on the gas valve identifier.

In a second aspect of the invention, a gas valve for a heating system (e.g. the heating system of the first aspect) is provided. The gas valve comprises a gas valve control unit operative and configured to:
- store parameter data of the gas valve;
- communicate with a gas burner controller; and
- transmit the parameter data to the gas burner controller using power lines between the gas valve and the gas burner controller.

In a third aspect of the invention, a gas valve control unit for controlling a gas valve (e.g. the gas valve of the second aspect) in a heating system (e.g. the heating system of the first aspect), the gas valve control unit being configured to:
- control the gas valve to operate the opening and closing of the valve for regulating the amount of gas flow through the gas valve;
- store parameter data of the gas valve;
- communicate with a gas burner controller; and
- transmit the parameter data to the gas burner controller using power lines between the gas valve and the gas burner controller.

The following features and embodiments thus apply to the first aspect, the second aspect and the third aspect equally.

In some embodiments the gas valve control unit comprises a microcontroller, for example, an MCU unit comprising a microcontroller. The microcontroller may be provided in electronic communication with the gas burner controller. The gas valve may include a stepper motor for controlling operation of the valve and the microcontroller may be connected to the stepper motor of the gas valve. The microcontroller may be configured to control the opening and closing of the valve by moving the stepper motor. The microcontroller may also be connected to the gas burner controller of the gas burner and may receive power from the gas burner controller via power lines extending therebetween. The microcontroller may comprise a memory unit, wherein the memory unit stores the parameter data associated with the gas valve. Alternatively or in addition a CLPD (Complex Programmable Logic Device), or FPGA (Field Programmable Gate Arrays) may be used.

In some embodiments, the gas valve control unit may be configured and operative to transmit the parameter data to the gas burner controller in response to receipt of an enquiry signal transmitted from the gas burner controller. The microcontroller may receive an enquiry signal, and in response thereto, transmit the parameter data to the gas burner controller. Thus, in some embodiments, the gas burner controller may be configured to transmit an enquiry signal to the gas valve control unit, which may in turn comprise a microcontroller, via the power lines. Similarly, in some embodiments, the gas valve control unit is configured to receive an enquiry signal from the gas burner controller.

In some embodiments, the enquiry signal may be transmitted upon power up of the gas burner. The enquiry signal may be transmitted automatically upon power up. The gas burner may be provided with a timer such that it is arranged to turn on at a certain time and turn off at a specified time later. Alternatively, the gas burner may be manually switched on. The gas burner may transmit an enquiry signal to the gas valve control unit when the gas burner is turned on, when activated by the timer and/or when manually switched on.

In some embodiments, the enquiry signal may be transmitted every time that the gas burner is turned on. In other embodiments, the enquiry signal may be transmitted only the first time that the gas burner is turned on (e.g. after installation) and/or after a power interruption (e.g. a power outage). In some embodiments, the enquiry signal may be transmitted to the gas valve periodically. This can help to ensure that the calibration data stored on the gas burner controller has not shifted or been corrupted over time.

A gas valve requires a certain power or voltage to operate, e.g. 24 V, which creates a current that is conducted along a power line from the gas burner controller to the gas valve. For example, the power line may connect the stepper motor of the gas valve to the gas burner controller. Alternatively, or in addition, the power line may connect a microcontroller of the gas valve control unit to the gas burner controller. Upon receipt of this current, under minimum voltage conditions, the gas valve is provided with the power sufficient to open and close the valve (e.g. move the position of the stepper motor). In some embodiments, the enquiry signal may be a voltage provided along the power line between the gas burner controller and the gas valve (such that the gas burner can provide power to the gas valve) that is lower than the voltage required to operate the valve i.e. to move the stepper motor to modulate gas flow. For example, the stepper motor has a threshold voltage at which the stepper motor may change position and thus function to vary the flow rate through the valve and/or open or close the valve. If the voltage required to operate the valve is 24 V, the enquiry signal, which is conducted along the same power line, may comprise a voltage of less than 24 V. In some embodiments, the enquiry signal comprises the provision of a 5 V voltage along the power line to the gas valve. Because the enquiry signal is provided at a lower voltage than the voltage required to operate the gas valve, the enquiry signal is able to be transmitted without causing operation of the gas valve. The lower voltage is however sufficient to power the electronics on the gas valve control unit to establish communication with the gas burner controller and transmit parameter data, while being insufficient energy for the operation of the valve itself. As such, the valve is not operated and/or the position of the stepper motor cannot be changed due to the insufficient power supplied. At the same time, the enquiry signal provides sufficient energy to allow the parameter data to be communicated from the gas valve control unit to the gas burner controller without the activation or operation of the gas valve.

In some embodiments, after receipt of the enquiry signal, the parameter data is transmitted from the gas valve control unit to the gas burner controller in the form of a modulated signal via the power lines. For example, the gas valve control unit of the gas valve transmits a binary signal to the gas burner controller comprising two voltage bands. The microcontroller of the gas valve control unit may transmit a binary signal to the gas burner controller comprising two voltage bands.

Preferably, one of the two voltage bands corresponds to 0 and the other voltage band corresponds to 1 Boolean values. In other words, the modulated signal is a binary signal comprising a first voltage band and a second voltage band. In some embodiments, the first voltage band is substantially equal to the voltage of the enquiry signal and the second voltage band may be less than the voltage of the enquiry signal. For example, the first voltage band may be 5 V, and the second voltage band may be less than 5 V, e.g. one of 4 V, 3 V, 2 V, 1 V, 0 V or ground.

In some embodiments, the gas burner controller comprises a demodulation unit to decode the modulated (e.g. binary) signal. Thus, the gas burner controller may be further configured to receive the parameter data as a modulated signal and demodulate or decode the modulated signal to extract the parameter data therefrom. The gas burner controller may also be configured to store in its memory the demodulated or decoded data.

In some embodiments, the parameter data may be decoded before or after the parameter data is transferred to and stored in the memory of the gas burner controller. The gas burner controller memory may be a non-volatile memory unit or volatile memory unit. The gas valve parameter data may be stored in the gas burner controller in coded or decoded form. Thus, the gas burner controller is further configured to store the parameter data received from the gas valve control unit. If it is stored in a volatile memory unit, the enquiry signal may need to be transmitted more frequently than if it is stored in non-volatile memory unit.

In some embodiments, the parameter data comprises calibration data. The calibration data is determined by the manufacturer and pre-stored on the gas valve control unit. Preferably this is undertaken prior to installation in the heating system and may be during manufacture. The calibration data package may include an integrity check overhead (CRC), a hash checksum overhead (e.g using SHA-256) and/or a electronic signature (e.g. using RSA). In some embodiments, the calibration data may comprise a calibration "curve" providing the relationship between the gas valve position and the volume of gas flowed through the gas valve. The calibration data may thus define the relationship between the extent to which the valve is open or closed and the flow of gas and enable the gas burner controller to control the gas valve to a particular open position that corresponds to a desired flow rate. It will be appreciated that the extent to which the gas valve is opened or closed directly correlates to the step number of the stepper motor. It will also be appreciated that a calibration curve may be linear or non-linear in nature and may be directly or indirectly proportional, depending on the axes used. For example, a gas valve comprising a stepper motor will typically have a direct relationship between the number of steps taken (assuming that 0 steps taken corresponds to a closed valve) and the resulting gas flow through the gas valve. Thus, if a stepper motor comprises 480 steps per revolution (e.g. it takes 480 steps to move between the valve being fully closed and the valve being fully opened), at step 480 the flow volume of gas may not be double the flow volume of gas at step 240. For example, at step 480 the flow volume may be 2.3 m³ whereas at step 240 the flow volume may be 1 m³, which is less than half of the flow volume at step 480. It will thus be appreciated that the change in the flow volume in transitioning from one step position to another step position will be variable depending on the initial step position. For example, the change in flow volume by moving from step 100 to 101 may be smaller or greater than the change in flow volume by moving from step 444 to 445. It will be appreciated that operation of the valve between the open (on) state and closed (off) state may be performed independently of the actuator, with the actuator modulating the degree to which it is open to vary gas flow.

The parameter data may include gas valve identity. The gas valve identity may be indicated by a product number, the make, the model, serial number and/or the OS number. The parameter data may further comprise statistical information associated with the gas valve such as the number of cycles associated with the operation of the valve. The parameter data may be transmitted using a modulated signal that may contain clock information such as Manchester code.

In some embodiments the parameter data includes the gas valve identity and the gas burner controller is operative to query the gas valve identity. The gas valve identity is communicated from the gas valve control unit to the gas burner controller in response to an enquiry from the gas burner controller. The gas burner controller may be further configured to compare the gas valve identity with expected gas valve identity data to confirm whether the correct (expected) gas valve is installed. The gas burner controller may also be further configured to prevent the operation of the gas valve if it is determined that the gas valve installed is incorrect.

In some embodiments, the gas burner controller is configured to determine, based for example on the gas valve identity, if the gas valve is appropriate for the gas burner. It will be appreciated that different gas burners may require varied ranges of rates of gas flow into the gas burner to operate. As such, a gas valve that cannot operate at the required ranges for the burner may be unsuitable for use in the heating system comprising that burner. For example, a gas valve with a small aperture may not meet the required maximum rate flow needed for the burner when the aperture of the gas valve is fully open and maximum gas flow for the valve attained. Similarly, a particular gas burner may require a gas valve with a fine step control to precisely control the gas flow. For example, a greater number of steps in a stepper motor may provide more precise control of the opening and closing of the gas valve. As such, a gas valve with a large step size (e.g. fewer number of steps) may not be suitable.

In some embodiments, to determine if the valve is appropriate for the gas burner, the gas burner controller is configured to store within its memory, gas valve data such as a list or database of gas valves that may be appropriate for use with the gas burner controller. This data may take the form of a list of gas valve identities, such as OS numbers associated with appropriate gas valves that are pre-determined to be suitable. Thus, in some embodiments, the gas burner controller is configured to, upon receipt of the parameter data, compare the parameter data with a database of gas valves appropriate for use with the gas burner stored in the gas burner controller's memory and determine if the gas valve is appropriate for use with the gas burner. For example, the parameter data may comprise an OS number of the gas valve and the gas burner controller may compare this OS number to a list of OS numbers stored within its memory representative of gas valves that would be appropriate for use with the gas burner.

If the gas valve is determined not to be appropriate, the gas burner controller may be configured to shut down the gas burner, and optionally the gas burner controller may be configured to transmit an error message. In some embodiments the transmission of the error message may be direct via wired communication. The transmission may be wireless. In some embodiments, the error message may be presented on a user device and/or on a display panel on the controller. The error message may be wirelessly transmitted from the gas burner controller, and the gas burner controller may comprise a wireless transmitter.

Similarly, if the gas valve is determined to be suitable, the gas burner controller may be configured to switch the operation of the gas burner from enquiry mode to operation mode. In enquiry mode the enquiry signal is transmitted. In operation mode, the gas valve is in operation and configured to control the flow of gas into the gas burner. Optionally, the gas burner controller may be configured to transmit a confirmation message that the gas valve installation has been successfully completed. In some embodiments the transmission may be direct via wired communication. In some embodiments, the transmission may be wireless via a wireless transmitter. This confirmation message may be presented on a user device and/or on a gas burner controller display panel.

In some embodiments, after the parameter data has been received at the gas burner controller and/or stored in the gas burner controller's memory, the gas burner controller is configured to be switched to an operation mode. To switch to operation mode, a voltage sufficient to operate the gas valve may be supplied to the power lines is provided. This operation voltage is greater than the voltage of the enquiry signal. Switching to operation mode may be manually triggered or may be triggered by the controller logic, for example once the parameter data has been transferred to the memory unit. In such an embodiment, the gas valve control unit may be further configured to detect that the enquiry signal is no longer being transmitted and in response, stop the transmission of the parameter data to the gas burner controller. The gas valve control unit may be further or alternatively configured to detect that the voltage has increased from the enquiry signal voltage to the full power operation voltage and, in response, stop the transmission of the modulated signal to the gas burner controller.

In some embodiments, the gas valve control unit may be configured to collect data indicating the operation of the gas valve across time. The gas burner controller may also be used to collect of operation data in cooperation with the gas valve controller. For example, the gas valve controller may not have real time clock (RTC) module, so the timestamp information may be supplied from the burner controller to as part of the collected data. The gas valve control unit may be configured to collect data representative of the operation of the gas valve across a pre-determined period of operation. This operation data may be collected and stored in the gas valve controller unit's memory unit. In some embodiments, the gas valve controller unit may be configured to transmit the collected data to a user device, for example as raw data or as part of a diagnostic report of the operation of the gas valve. The collected data may be transmitted wirelessly, directly via wired communication lines, at regular intervals, such as at predetermined intervals and/or when a threshold has been met, such as when the gas valve has performed a certain number of cycles. Alternatively, the data may be communicated to a device on request, for example during a maintenance inspection.

Thus, the gas valve control unit may allow diagnostics to be conducted on the operation of the device and early indication that the gas valve is not operating correctly and/or needs to be replaced. Preferably, the memory unit of the gas valve control unit is large enough to store data across the lifetime of the gas valve operation.

The present invention thus provides a gas valve that may be installed more simply into a heating system and with increased confidence, and thus provide a heating system with improved safety and simplified installation.

In another aspect of the invention a gas valve comprises a control unit, the control unit being configured to:
- store parameter data of the gas valve; and
- transmit the stored parameter data to the gas burner controller using power lines between the gas valve and the gas burner controller.

The control unit may comprise a microcontroller and the parameter data may comprise calibration data. The control unit may be configured to receive an enquiry signal from a gas burner controller and transmit the parameter data to the gas burner along power lines in response to receipt of the enquiry signal. The enquiry signal is transmitted upon power up of the gas burner. The enquiry signal may comprise a voltage provided along a power line between the gas burner controller and the gas valve, wherein the voltage of the enquiry signal is lower than the voltage required to operate the gas valve. The parameter data is transmitted from the control unit to the gas burner controller in the form of a modulated signal via the power lines. The modulated signal may be a binary signal comprising two voltage bands, wherein one of the two voltage bands corresponds to a 0 Boolean value and the other of the two voltage bands corresponds to a 1 Boolean value.

In another aspect of the invention a gas valve control unit is provided for controlling a gas valve for a heating system, the gas valve control unit being configured to:
- communicate with the gas valve to operate the opening and closing of the gas valve;
- store parameter data of the gas valve;
- communicate with a gas burner controller; and
- transmit the parameter data to the gas burner controller using power lines between the gas valve and the gas burner controller.

The heating system of the present invention thus enables calibration data to be communicated to the gas burner controller by storing the calibration data directly on the gas valve and utilising the pre-existing power line connection between the gas valve and gas burner controller to facilitate low voltage communication between the components, which would not otherwise communicate. This inter-appliance communication is created with only 2 endpoints. Gas flow parametrization data for the gas valve, communicated to the gas burner controller (boiler control board) over the powerlines replaces the 2D QR code or manually data entry stickers and ensures correct data transfer to the controller. The present system also enables verification of the connected gas valve type, ensuing proper operation and also for example enabling the system to ensure any replacement parts added to the system are correct. This also future proofs the system by allowing for upgrade kits, such as hydrogen upgrade kits, which may include burner upgrades, to be readily installed, with the powerline data transfer shadowed enabling the system to verify that the existing components (i.e. the valves) are capable of operate safely with the upgraded hydrogen fuel. The system may also determine whether the valve is able to continue operation following a given period or number of operation cycles. The provision of a read /write memory on the gas valve control unit also enables other data such as the boiler configuration (i.e. gas burner controller parameters) to be on the gas valve, such that the system may restore a replacement controller in the event of failure, with the previous configuration being restored from the shadow copy stored on gas valve.

### BRIEF DESCRIPTION OF THE DRAWINGS

The present invention will now be described by way of example only with reference to the following illustrative figures in which:
**Figure 1** shows a gas valve in accordance with an embodiment of the present invention.
**Figure 2** shows a flow diagram in accordance with an embodiment of the present invention.
**Figure 3** shows a circuit diagram in accordance with an embodiment of the present invention.

### DESCRIPTION OF EMBODIMENTS

Certain embodiments of the present invention will be discussed with respect to the Figures.

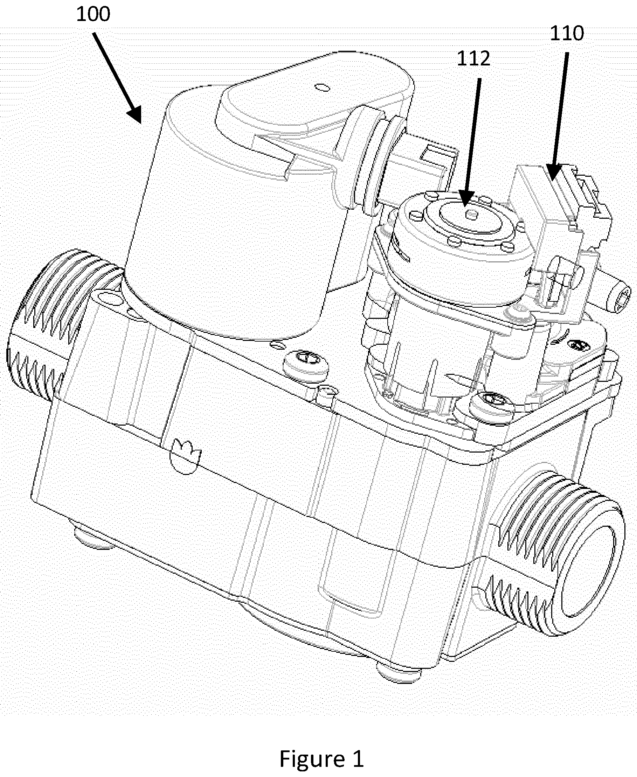

Figure 1 shows a gas valve 100 comprising a gas valve control unit 110. The gas valve 100 controls the flow of gas, through a gas inlet, to a gas burner. The gas burner includes a gas burner controller. The gas valve 100 includes a stepper motor 112 arranged to control opening of the valve. The gas burner controller controls the operation of the stepper motor within the gas valve 100 and thus controls the operation of the gas valve 100 to control the flow of gas into the gas burner. The gas valve 100 is in electronic communication with the gas burner controller via one or more power lines. The gas burner controller can provide power to the stepper motor and the gas valve control unit via the power lines.

The gas valve control unit 110 comprises a memory unit inside which parameter data is stored. The parameter data may include one or more of calibration data, a gas valve identifier, and/or statistical information associated with the gas valve such as the number of cycles associated with the operation of the valve. The gas burner controller is configured to transmit an enquiry signal to the gas valve control unit 110 along the power lines. The gas valve control unit transmits parameter data from the gas valve control unit to the gas burner controller via the pre-existing power lines in response to the enquiry. The gas burner controller, upon receipt of the parameter data, uses the parameter data to properly operate the gas valve. For example, the parameter data may comprise calibration data that allows the gas burner controller to determine how many steps to move the stepper motor to affect a desired gas flow change, and to operate the stepper motor accordingly.

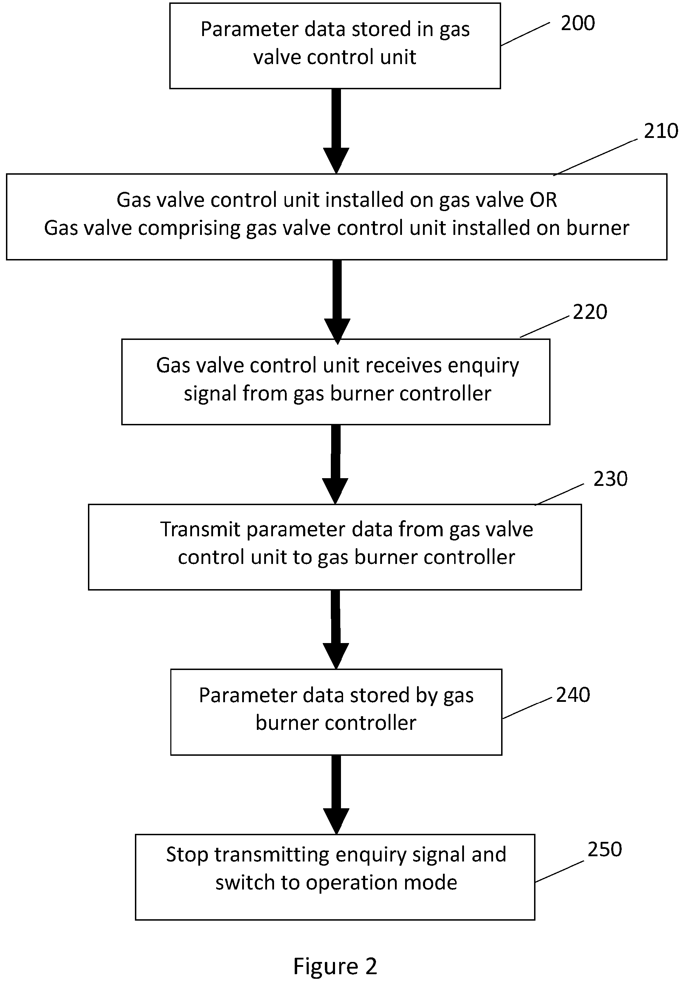

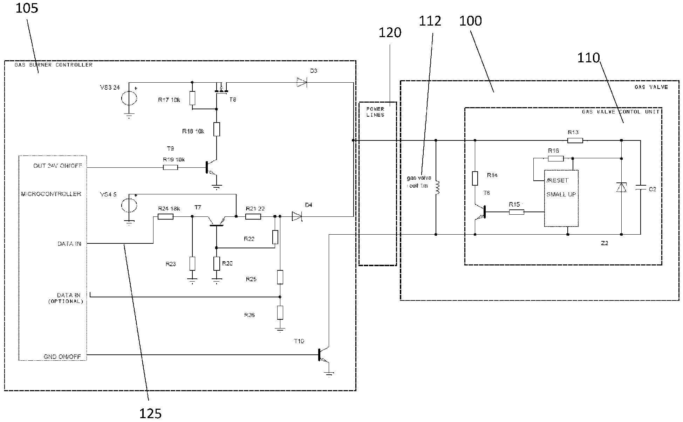

With reference to Figure 2, the parameter data is transferred to and stored in the gas valve control unit 110 (step 200), i.e. during manufacture. The gas valve 100 may be provided with the gas valve control unit 110 pre-installed. The parameter data is loaded onto the gas valve control unit 110 after the gas valve control unit 110 has been installed on the gas valve 100, ensuring the data is associated with the correct valve.

The gas valve 100 comprising the control unit 110 is installed on a gas burner (step 210). The gas valve control unit 110 is in electronic communication with the gas burner controller. When the system is operative, the gas burner controller transmits an enquiry signal to the gas valve control unit (step 220) via the power line connection between the two components. This may, for example, occur on start up or upon a manual input from an installer after installation is complete. The enquiry signal is generated by a voltage that is less than the operating voltage of the valve. For example, the enquiry signal may be generated by a 5 V voltage along the power line to the gas valve, whereas the operating voltage of the gas valve is 24V.

Upon receipt of the enquiry signal (step 220) the gas valve control unit 110 transmits the parameter data to the gas burner controller (step 230). Transmission may occur as a modulated signal via the pre-existing power lines. The parameter data is then stored by the gas burner controller (step 240) to be used to operate the gas valve 100.

When the parameter data is transmitted as a modulated signal, the parameter data is received in coded form. Thus, the modulated signal (representative of the parameter data) needs to be decoded at the gas burner controller in a demodulation unit. In some embodiments, the modulated signal may be decoded before or after the parameter data is stored in the memory of the gas burner controller.

Once the gas burner controller 105 has received, and stored, the parameter data, the gas burner controller 105 stops transmitting the enquiry signal (step 250). At this point the gas burner is switched to operation mode. To switch to operation mode the power supplied to the gas valve 100 via the same line that the enquiry signal was transmitted along is increased to the operational voltage of the gas valve 100 (e.g. 24V), which is sufficient to enable the gas valve to be operated by the stepper motor.

Figure 3 shows a circuit diagram illustrating the electronic communication between the gas burner controller 105 and the gas valve control unit 110. In an embodiment, the circuit may be used in the following manner. After power up of the system, the gas burner controller 105 provides a 5V voltage as the enquiry signal on power line 120 of the gas valve 100, and grounds one of its stepper motor coils 112 via the power line 120. This provides enough energy for the electronics (gas valve control unit 110) on the gas valve 100 to operate, but not enough energy for the stepper motor 112 to change its position. Upon receipt of the enquiry signal, the MCU of the gas valve control unit 110 starts transmitting the modulated signal to the gas burner controller 105 by shorting weak 5V to ground via a resistor (5V level 1s, 4V level 0s). The modulated 5V signal on power line 120 is then decoded using the receiver circuit and the demodulated signal 125 is processed by microcontroller on the gas burner controller 105 and the parameter data (e.g. calibration data) is stored on the gas burner controller memory. After the parameter data has been transferred, the burner controller 105 switches the power supplied to stepper motor to the 24V operational voltage, such that the gas burner is placed in operation mode. This change in the voltage on power line 120 is detected by the gas valve control unit 110 and, in response, the gas valve control unit 110 stops sending the modulated signal on power line 120, and the stepper motor is operated in normal operation to open or close the valve.

## Claims

1. A gas valve control unit (110) for controlling a gas valve (100) for a heating system, the gas valve control unit (110) being configured to:
- store parameter data of the gas valve (100);
- communicate with a gas burner controller (105); and
- transmit the parameter data to a gas burner controller (105) **characterised by** using one or more power lines (120) between the gas valve (100) and the gas burner controller (105) for said transmitting.

2. A gas valve (100) comprising the gas valve control unit (110) of claim 1.

3. A heating system comprising:
a gas burner configured to burn gas to produce heat, the gas burner comprising a gas inlet and a gas burner controller (105); and
the gas valve (100) of claim 2; wherein
the gas valve (100) is arranged to regulate the flow of gas to the gas inlet of the gas burner, and the gas valve (100) is connected to the gas burner controller (105) via the one or more power lines; and
wherein the gas valve control unit includes stored parameter data of the gas valve.

4. The heating system of claim 3, wherein the gas burner controller (105) is operative to transmit an enquiry signal to the gas valve control unit (110), and the gas valve control unit (110) is operative to transmit the parameter data to the gas burner controller (105) in response to receipt of the enquiry signal.

5. The heating system of claim 4, wherein the gas valve (100) has an operating voltage required to operate the gas valve (100) and wherein the enquiry signal comprises a voltage provided along at least one of the power lines (120) between the gas burner controller (105) and the gas valve (100) that is lower than the operating voltage of the gas valve (100).

6. The heating system of claim 4 or 5, wherein the enquiry signal is transmitted upon power up of the gas burner.

7. The heating system of claim 5 or 6 wherein the gas valve (100) includes an actuator for operating the gas valve (100) and the operating voltage is the voltage required to operate the actuator.

8. The heating system of any of the preceding claims 3-7, wherein the parameter data is transmitted from the gas valve control unit (110) to the gas burner controller (105) in the form of a modulated signal via the power lines (120).

9. The heating system of claim 8 wherein the modulated signal is a binary signal comprising two voltage bands and the gas burner controller (105) comprises a demodulation unit to decode the modulated signal.

10. The heating system of claim 9 wherein the two voltage bands comprise a first voltage and a second voltage and wherein the first and second voltages are both lower than the operating voltage of the gas valve (100).

11. The heating system of claim 10 wherein the operating voltage of the gas valve (100) is in the range 18V to 30V, the first voltage is in the range 2V to 10V and the second voltage is less than the first voltage.

12. The heating system of any of the preceding claims 3-11, wherein the parameter data includes a gas valve identifier and the gas burner controller (105) is configured to verify installation of a correct gas valve (100) based on the gas valve identifier.

13. The heating system of claim 12, wherein the gas burner controller (105) includes a stored database of gas valve identifiers corresponding to gas valves suitable for use with the gas burner, and the gas burner controller (105) is configured to, upon receipt of the parameter data, compare the gas valve identifier with said database to verify installation of a suitable gas valve (100).

14. The heating system of any of the preceding claims 3-13, wherein the parameter data comprises calibration data of the gas valve (100).

15. The heating system of claim 14 wherein the gas burner controller (105) is operative to control the gas valve (100) based on said calibration data.

16. The heating system of any of the preceding claims 3-15, wherein the gas burner controller (105) is operative to transmit data to the gas valve control unit (110).

## Patentansprüche

1. Eine Gasventilsteuereinheit (110) zum Steuern eines Gasventils (100) für ein Heizsystem, wobei die Gasventilsteuereinheit (110) für Folgendes konfiguriert ist:
- Speichern von Parameterdaten des Gasventils (100);
- Kommunizieren mit einer Gasbrennersteuervorrichtung (105); und
- Übertragen der Parameterdaten an eine Gasbrennersteuervorrichtung (105), **gekennzeichnet durch** das Verwenden einer oder mehrerer Stromleitungen (120) zwischen dem Gasventil (100) und der Gasbrennersteuervorrichtung (105) für das Übertragen.

2. Ein Gasventil (100), das die Gasventilsteuereinheit (110) gemäß Anspruch 1 beinhaltet.

3. Ein Heizsystem, das Folgendes beinhaltet:
einen Gasbrenner, der konfiguriert ist, um zum Produzieren von Wärme Gas zu verbrennen, wobei der Gasbrenner einen Gaseinlass und eine Gasbrennersteuervorrichtung (105) beinhaltet; und
das Gasventil (100) gemäß Anspruch 2; wobei
das Gasventil (100) eingerichtet ist, um den Fluss von Gas zu dem Gaseinlass des Gasbrenners zu regulieren, und das Gasventil (100) über die eine oder die mehreren Stromleitungen mit der Gasbrennersteuervorrichtung (105) verbunden ist; und
wobei die Gasventilsteuereinheit gespeicherte Parameterdaten des Gasventils umfasst.

4. Heizsystem gemäß Anspruch 3, wobei die Gasbrennersteuervorrichtung (105) betriebsfähig ist, um ein Anfragesignal an die Gasventilsteuereinheit (110) zu übertragen, und die Gasventilsteuereinheit (110) betriebsfähig ist, um als Reaktion auf den Empfang des Anfragesignals die Parameterdaten an die Gasbrennersteuervorrichtung (105) zu übertragen.

5. Heizsystem gemäß Anspruch 4, wobei das Gasventil (100) eine Betriebsspannung aufweist, die erforderlich ist, um das Gasventil (100) zu betreiben, und wobei das Anfragesignal eine Spannung beinhaltet, die entlang mindestens einer der Stromleitungen (120) zwischen der Gasbrennersteuervorrichtung (105) und dem Gasventil (100) bereitgestellt wird und niedriger als die Betriebsspannung des Gasventils (100) ist.

6. Heizsystem gemäß Anspruch 4 oder 5, wobei das Anfragesignal beim Einschalten des Gasbrenners übertragen wird.

7. Heizsystem gemäß Anspruch 5 oder 6, wobei das Gasventil (100) einen Aktor zum Betreiben des Gasventils (100) umfasst und die Betriebsspannung die zum Betreiben des Aktors erforderliche Spannung ist.

8. Heizsystem gemäß einem der vorhergehenden Ansprüche 3-7, wobei die Parameterdaten in Form eines modulierten Signals über die Stromleitungen (120) von der Gasventilsteuereinheit (110) an die Gasbrennersteuervorrichtung (105) übertragen werden.

9. Heizsystem gemäß Anspruch 8, wobei das modulierte Signal ein binäres Signal ist, das zwei Spannungsbänder beinhaltet, und die Gasbrennersteuervorrichtung (105) eine Demodulationseinheit zum Decodieren des modulierten Signals beinhaltet.

10. Heizsystem gemäß Anspruch 9, wobei die zwei Spannungsbänder eine erste Spannung und eine zweite Spannung beinhalten und wobei sowohl die erste als auch die zweite Spannung niedriger als die Betriebsspannung des Gasventils (100) sind.

11. Heizsystem gemäß Anspruch 10, wobei die Betriebsspannung des Gasventils (100) in dem Bereich von 18 V bis 30 V liegt, die erste Spannung in dem Bereich von 2 V bis 10 V liegt und die zweite Spannung niedriger als die erste Spannung ist.

12. Heizsystem gemäß einem der vorhergehenden Ansprüche 3-11, wobei die Parameterdaten eine Gasventilkennung umfassen und die Gasbrennersteuervorrichtung (105) konfiguriert ist, um auf der Basis der Gasventilkennung die Installation eines korrekten Gasventils (100) zu verifizieren.

13. Heizsystem gemäß Anspruch 12, wobei die Gasbrennersteuervorrichtung (105) eine gespeicherte Datenbank von Gasventilkennungen umfasst, die zur Verwendung mit dem Gasbrenner geeigneten Gasventilen entsprechen, und die Gasbrennersteuervorrichtung (105) konfiguriert ist, um bei Empfang der Parameterdaten die Gasventilkennung mit der Datenbank zu vergleichen, um die Installation eines geeigneten Gasventils (100) zu verifizieren.

14. Heizsystem gemäß einem der vorhergehenden Ansprüche 3-13, wobei die Parameterdaten Kalibrierungsdaten des Gasventils (100) beinhalten.

15. Heizsystem gemäß Anspruch 14, wobei die Gasbrennersteuervorrichtung (105) betriebsfähig ist, um das Gasventil (100) auf der Basis der Kalibrierungsdaten zu steuern.

16. Heizsystem gemäß einem der vorhergehenden Ansprüche 3-15, wobei die Gasbrennersteuervorrichtung (105) betriebsfähig ist, um Daten an die Gasventilsteuereinheit (110) zu übertragen.

## Revendications

1. Une unité de contrôle de soupape à gaz (110) pour le contrôle d'une soupape à gaz (100) pour un système de chauffage,
l'unité de contrôle de soupape à gaz (110) étant configurée pour :
- stocker des données de paramètre de la soupape à gaz (100) ;
- communiquer avec un contrôleur de brûleur à gaz (105) ; et
- transmettre les données de paramètre à un contrôleur de brûleur à gaz (105) **caractérisée par** l'utilisation d'une ou de plusieurs lignes d'alimentation (120) entre la soupape à gaz (100) et le contrôleur de brûleur à gaz (105) pour ladite transmission.

2. Une soupape à gaz (100) comprenant l'unité de contrôle de soupape à gaz (110) de la revendication 1.

3. Un système de chauffage comprenant :
un brûleur à gaz configuré pour brûler du gaz pour produire de la chaleur, le brûleur à gaz comprenant une entrée de gaz et un contrôleur de brûleur à gaz (105) ; et
la soupape à gaz (100) de la revendication 2 ; dans lequel
la soupape à gaz (100) est agencée pour réguler le débit de gaz jusqu'à l'entrée de gaz du brûleur à gaz, et la soupape à gaz (100) est reliée au contrôleur de brûleur à gaz (105) par l'intermédiaire des une ou plusieurs lignes d'alimentation ; et
dans lequel l'unité de contrôle de soupape à gaz inclut des données de paramètre stockées de la soupape à gaz.

4. Le système de chauffage de la revendication 3, dans lequel le contrôleur de brûleur à gaz (105) fonctionne pour transmettre un signal d'interrogation à l'unité de contrôle de soupape à gaz (110), et l'unité de contrôle de soupape à gaz (110) fonctionne pour transmettre les données de paramètre au contrôleur de brûleur à gaz (105) en réponse à la réception du signal d'interrogation.

5. Le système de chauffage de la revendication 4, dans lequel la soupape à gaz (100) a une tension de fonctionnement nécessaire pour faire fonctionner la soupape à gaz (100) et dans lequel le signal d'interrogation comprend une tension fournie le long d'au moins une des lignes d'alimentation (120) entre le contrôleur de brûleur à gaz (105) et la soupape à gaz (100) qui est inférieure à la tension de fonctionnement de la soupape à gaz (100).

6. Le système de chauffage de la revendication 4 ou de la revendication 5, dans lequel le signal d'interrogation est transmis lors de l'allumage du brûleur à gaz.

7. Le système de chauffage de la revendication 5 ou de la revendication 6 dans lequel la soupape à gaz (100) inclut un actionneur pour faire fonctionner la soupape à gaz (100) et la tension de fonctionnement est la tension nécessaire pour faire fonctionner l'actionneur.

8. Le système de chauffage de n'importe lesquelles des revendications précédentes 3 à 7, dans lequel les données de paramètre sont transmises de l'unité de contrôle de soupape à gaz (110) au contrôleur de brûleur à gaz (105) sous la forme d'un signal modulé par l'intermédiaire des lignes d'alimentation (120).

9. Le système de chauffage de la revendication 8 dans lequel le signal modulé est un signal binaire comprenant deux bandes de tension et le contrôleur de brûleur à gaz (105) comprend une unité de démodulation pour décoder le signal modulé.

10. Le système de chauffage de la revendication 9 dans lequel les deux bandes de tension comprennent une première tension et une deuxième tension et dans lequel les première et deuxième tensions sont toutes les deux inférieures à la tension de fonctionnement de la soupape à gaz (100).

11. Le système de chauffage de la revendication 10 dans lequel la tension de fonctionnement de la soupape à gaz (100) est dans la plage de 18 V à 30 V, la première tension est dans la plage de 2 V à 10 V et la deuxième tension est plus faible que la première tension.

12. Le système de chauffage de n'importe lesquelles des revendications précédentes 3 à 11, dans lequel les données de paramètre incluent un identifiant de soupape à gaz et le contrôleur de brûleur à gaz (105) est configuré pour vérifier l'installation d'une soupape à gaz (100) correcte sur la base de l'identifiant de soupape à gaz.

13. Le système de chauffage de la revendication 12, dans lequel le contrôleur de brûleur à gaz (105) inclut une base de données stockée d'identifiants de soupape à gaz correspondant à des soupapes à gaz appropriées pour une utilisation avec le brûleur à gaz, et le contrôleur de brûleur à gaz (105) est configuré pour, lors de la réception des données de paramètre, comparer l'identifiant de soupape à gaz avec ladite base de données pour vérifier l'installation d'une soupape à gaz (100) appropriée.

14. Le système de chauffage de n'importe lesquelles des revendications précédentes 3 à 13, dans lequel les données de paramètre comprennent des données d'étalonnage de la soupape à gaz (100).

15. Le système de chauffage de la revendication 14 dans lequel le contrôleur de brûleur à gaz (105) fonctionne pour contrôler la soupape à gaz (100) sur la base desdites données d'étalonnage.

16. Le système de chauffage de n'importe lesquelles des revendications précédentes 3 à 15, dans lequel le contrôleur de brûleur à gaz (105) fonctionne pour transmettre des données à l'unité de contrôle de soupape à gaz (110).
